# EUROPEAN PATENT APPLICATION

(11) **EP 4 675 824 A1**
(43) Date of publication of application: **07.01.2026**
(21) Application number: 24763529.5
(22) Date of filing: 05.02.2024
(51) Int. Cl.: H01M 50/46, H01M 10/04, H01M 10/052, H01M 10/0587

(54) **SECONDARY BATTERY**

(30) Priority: 28.02.2023 JP 2023029177
(71) Applicant: Panasonic Energy Co., Ltd., Osaka 570-8511 (JP)
(72) Inventor: TANIGAWA, Kei, Kadoma-shi, Osaka 571-0057 (JP)
(74) Representative: Novagraaf International SA
(86) International application number: PCT/JP2024/003675
(87) International publication number: WO 2024/181045

(57) **Abstract**

A cylindrical battery (10) comprises an electrode body (14) that includes a positive electrode (11), a negative electrode (12), and a separator (13), the positive electrode (11) and the negative electrode (12) being wound with the separator (13) interposed therebetween. The separator (13) has a folded-back portion (50) that is formed more toward the winding center side than the winding start end portion of the positive electrode (11), and an extended portion (51) that extends from the folded-back portion (50) to the winding end side of the electrode body (14) and covers the winding start end portion of the positive electrode (11) from both sides.

## Description

### TECHNICAL FIELD

The present disclosure relates to a secondary battery, and more specifically to a secondary battery comprising a wound electrode assembly.

### BACKGROUND ART

Conventionally, a secondary battery comprising a wound electrode assembly including a positive electrode, a negative electrode, and a separator, wherein the positive electrode and the negative electrode are spirally wound via the separator, has been widely known (see, for example, Patent Literature 1). In a wound electrode assembly for use in a lithium-ion battery or the like, the negative electrode is typically formed one size larger than the positive electrode, and a winding start-side end of the negative electrode is located closer to a winding center than a winding start-side end of the positive electrode.

### CITATION LIST

### PATENT LITERATURE

PATENT LITERATURE 1: Japanese Unexamined Patent Application Publication No. 2020-92064

### SUMMARY

The wound electrode assembly expands and contracts in a radial direction due to charge and discharge, and at this time, deformation such as bending of the negative electrode in the vicinity of the winding start-side end of the positive electrode may occur. It is considered that stress due to the expansion and contraction of the electrode assembly tends to be concentrated in the vicinity of the winding start-side end of the positive electrode. If the stress further increases, the bending of the negative electrode may become larger and cause the separator to rupture at a bending part, resulting in an internal short circuit.

It is an advantage of the present disclosure to sufficiently reduce the risk of a short circuit that may occur in the vicinity of the winding center of the electrode assembly in a secondary battery comprising a wound electrode assembly.

A secondary battery according to the present disclosure is a secondary battery, comprising: an electrode assembly including a positive electrode, a negative electrode, and a separator, wherein the positive electrode and the negative electrode are wound with the separator interposed between the positive electrode and the negative electrode, wherein the separator has a folded-back portion formed closer to a winding center than a winding start-side end portion of the positive electrode, and an extension portion extending from the folded-back portion toward a winding end side of the electrode assembly to cover the winding start-side end portion of the positive electrode from both sides.

According to the secondary battery of the present disclosure, the risk of a short circuit that may occur in the vicinity of the winding center of the electrode assembly can be sufficiently reduced. Even if deformation such as bending of the negative electrode occurs in the vicinity of the winding start-side end of the positive electrode due to charge and discharge of the secondary battery, the separator may be more reliably prevented from rupturing and making contact between the negative electrode and the positive electrode.

### BRIEF DESCRIPTION OF DRAWING

FIG. 1 is a sectional view of a secondary battery of an example of an embodiment.
FIG. 2 is a view illustrating a winding center and its vicinity of an electrode assembly of an example of an embodiment.
FIG. 3 is an enlarged view of a part A in FIG. 2.
FIG. 4 is a view illustrating an example of a conventional electrode assembly.
FIG. 5 is a diagram illustrating a method for producing an electrode assembly of an example of an embodiment.

### DESCRIPTION OF EMBODIMENTS

Hereinafter, an example of embodiments of a secondary battery according to the present disclosure will be described in detail with reference to the drawings. The scope of the present disclosure includes constitutions composed of selective combinations of constitutional elements of a plurality of embodiments and modified examples described below.

In embodiments described below, a cylindrical battery 10, in which a wound electrode assembly 14 is housed in a bottomed cylindrical outer can 16, will be exemplified, but an exterior body of the battery is not limited to the cylindrical outer can. Examples of other embodiments of the secondary battery according to the present disclosure include a rectangular battery comprising a rectangular outer can and a pouch battery comprising an exterior body constituted with laminated sheets including a metal layer and a resin layer.

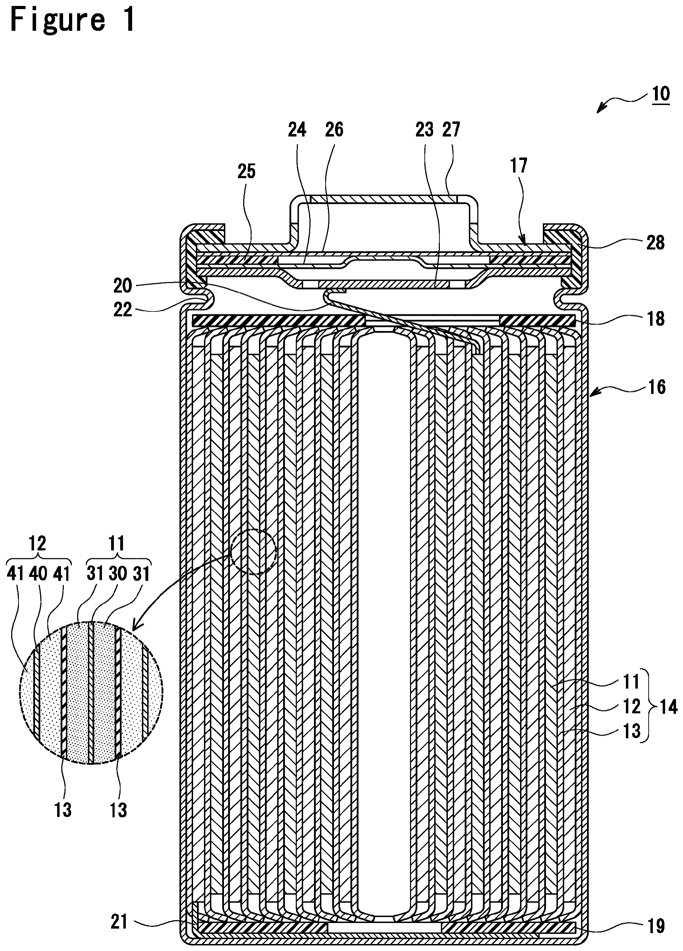

FIG. 1 is a view schematically illustrating an axial cross section of the cylindrical battery 10 of an example of an embodiment. As illustrated in FIG. 1, the cylindrical battery 10 comprises the wound electrode assembly 14, an electrolyte, the bottomed cylindrical outer can 16 housing the electrode assembly 14 and the electrolyte, and a sealing assembly 17 sealing an opening portion of the outer can 16. The electrode assembly 14 includes a positive electrode 11, a negative electrode 12, and a separator 13 and has a wound structure in which the positive electrode 11 and the negative electrode 12 are spirally wound with the separator 13 interposed between the positive electrode 11 and the negative electrode 12. Hereinafter, for convenience of description, the sealing assembly 17 side of the battery will be described as the upper side, and the bottom side of the outer can 16 will be described as the lower side.

The electrolyte may be an aqueous electrolyte, but in the present embodiment, a non-aqueous electrolyte is to be used. The non-aqueous electrolyte has ion conductivity (for example, lithium-ion conductivity). The non-aqueous electrolyte may be a liquid electrolyte (an electrolyte liquid) or may be a solid electrolyte. The cylindrical battery 10 is, for example, a lithium-ion battery.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, or the like is used, for example. The polymer electrolyte includes a lithium salt and a matrix polymer, or includes a non-aqueous solvent, a lithium salt, and a matrix polymer, for example. As the matrix polymer, a polymer material that absorbs the non-aqueous solvent to form a gel is used, for example. As the polymer material, a fluororesin, an acrylic resin, a polyether resin, or the like is used, for example. As the inorganic solid electrolyte, a known material for an all-solid lithium-ion secondary battery and the like (for example, an oxide-type solid electrolyte, a sulfide-type solid electrolyte, a halide-type solid electrolyte, or the like) is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than the positive electrode 11 and the negative electrode 12, and two of them are disposed so as to sandwich the positive electrode 11. The electrode assembly 14 has a positive electrode lead 20 connected to the positive electrode 11 by welding or the like and a negative electrode lead 21 connected to the negative electrode 12 by welding or the like.

The positive electrode 11 has a positive electrode core 30 and a positive electrode mixture layer 31 disposed on the positive electrode core 30. For the positive electrode core 30, a foil of a metal stable within a potential range of the positive electrode 11, such as aluminum, an aluminum alloy, stainless steel, and titanium, a film in which such a metal is disposed on a surface layer thereof, and the like may be used. The positive electrode mixture layer 31 includes a positive electrode active material, a conductive agent, and a binder, and is preferably provided on both surfaces of the positive electrode core 30. For the positive electrode active material, a lithium-transition metal composite oxide containing a transition metal element such as Ni, Co, and Mn is used.

The negative electrode 12 has a negative electrode core 40 and a negative electrode mixture layer 41 disposed on the negative electrode core 40. For the negative electrode core 40, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. For the negative electrode active material, a carbon material that reversibly occludes and releases lithium ions is typically used. For the negative electrode active material, an element that forms an alloy with Li, such as Si and Sn, a material containing such an element, and the like may be used.

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. The separator 13 may have, for example: a multi-layered structure including a thermoplastic resin layer such as a polyolefin and a cellulose fiber layer; a bilayer structure of polyethylene (PE)/polypropylene (PP); or a three-layer structure of PE/PP/PE.

On a surface of the separator 13, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the separator 13. On the surface of the separator 13, a highly heat-resistant resin layer (a heat-resistant layer) such as an aramid resin may be disposed. The separator 13 may have a substrate composed of the porous sheet and the filler layer or the heat-resistant layer disposed on the substrate, for example.

The outer can 16 is a bottomed cylindrical metallic container having an opening portion on one end side in an axial direction, and the upper opening portion of the outer can 16 is sealed with the sealing assembly 17. The cylindrical battery 10 comprises an upper insulating plate 18 disposed between the electrode assembly 14 and the sealing assembly 17. In addition, the cylindrical battery 10 comprises a lower insulating plate 19 disposed between the electrode assembly 14 and a bottom inner surface of the outer can 16. That is, insulating plates are each disposed on the upper and lower sides of the electrode assembly 14.

In the present embodiment, the positive electrode lead 20 extends through a through hole 60 of the upper insulating plate 18 toward the sealing assembly 17 side, and the negative electrode lead 21 extends through the outside of the lower insulating plate 19 toward the bottom side of the outer can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the outer can 16 by welding or the like, and the outer can 16 becomes a negative electrode terminal.

A gasket 28 is provided between the outer can 16 and the sealing assembly 17 to achieve sealability inside the battery. The gasket 28 also has the function of insulating the outer can 16 and the sealing assembly 17. On the outer can 16, a grooved portion 22 in which a part of a side surface portion thereof projects inward to support the sealing assembly 17 is formed. The grooved portion 22 is preferably formed in a circular shape along a circumferential direction of the outer can 16, and supports the sealing assembly 17 with the upper face thereof. The sealing assembly 17 is fixed on the upper part of the outer can 16 with the grooved portion 22 and with an end part of the opening of the outer can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26.

If the internal pressure increases when an abnormality occurs in the cylindrical battery 10, the lower vent member 24 is deformed so as to push the upper vent member 26 up toward the cap 27 side and breaks, and thereby a current pathway between the lower vent member 24 and the upper vent member 26 is cut off. If the internal pressure of the battery further increases, the upper vent member 26 breaks, and a high-temperature gas is discharged through an opening portion of the cap 27. That is, the sealing assembly 17 is provided with a current interruption mechanism and a safety vent. The safety vent is composed of two vent members (the lower vent member 24 and the upper vent member 26).

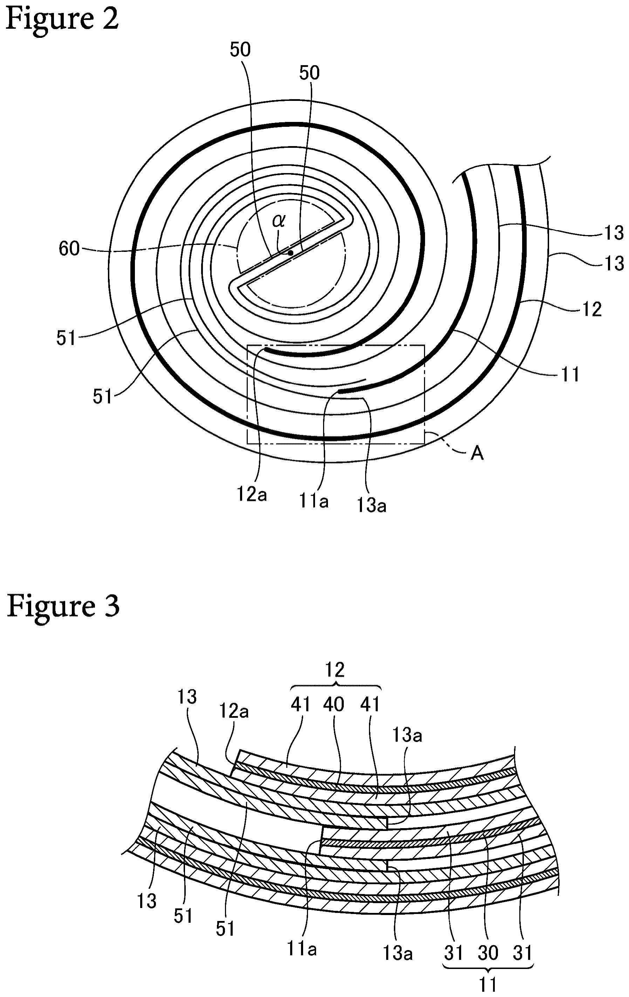

Hereinafter, the configuration of a winding center α of the electrode assembly 14 and its vicinity will be described in detail with reference to FIGS. 2 and 3 as appropriate. FIG. 2 is a view illustrating the winding center α of the electrode assembly 14 and its vicinity, and FIG. 3 is an enlarged view of a part A in FIG. 2.

As illustrated in FIG. 2, the electrode assembly 14 includes a positive electrode 11, a negative electrode 12, and two separators 13 and has a structure in which they are spirally wound. The two separators 13 are disposed to sandwich the positive electrode 11 and the negative electrode 12 from both sides. A single separator 13 is normally interposed between the positive electrode 11 and the negative electrode 12, and the two separators 13 are interposed between a winding start-side end portion of the positive electrode 11 and the negative electrode 12. As a result, the risk of a short circuit which may occur in the vicinity of the winding center α of the electrode assembly 14 can be sufficiently reduced. The details of this point will be described later.

In the vicinity of the winding center α of the electrode assembly 14, a negative electrode start end 12a is located closer to the winding center than a positive electrode start end 11a. As used herein, the positive electrode start end 11a means a winding start-side end of the positive electrode 11, which is one end of the positive electrode 11 in the longitudinal direction located at the winding center side of the electrode assembly 14. Similarly, the negative electrode start end 12a means a winding start-side end of the negative electrode 12, which is one end of the negative electrode 12 in the longitudinal direction located at the winding center side of the electrode assembly 14. The negative electrode 12 extends, for example, from the positive electrode start end 11a toward the winding center α by a length of greater than or equal to 0.25 laps and less than or equal to 1 lap.

A negative electrode lead 21 may be provided in the vicinity of the winding center α of the electrode assembly 14, for example, but in the present embodiment, the negative electrode lead 21 is provided at an end portion of the electrode assembly 14 on an outer peripheral side. The positive electrode lead 20 is connected to the central part of the positive electrode 11 in the longitudinal direction. That is, the positive electrode lead 20 and the negative electrode lead 21 are not disposed in the vicinity of the winding center α of the electrode assembly 14. In FIG. 2, a winding core 60 used in the production of the electrode assembly 14 is shown as a dash dotted line. The winding core 60 is removed after the electrode assembly 14 is produced, but the winding core 60 may be left in place.

In the vicinity of the winding center α of the electrode assembly 14, the two separators 13 extend further to the winding center side beyond the negative electrode start end 12a. The inner peripheral surface of the electrode assembly 14 is composed of the separator 13, and in the vicinity of the winding center α, only the separator 13 is wound over a length of, for example, one lap or more. That is, in the vicinity of the winding center α of the electrode assembly 14, a surplus portion of the separator 13 remains with a certain length.

The separator 13 has a folded-back portion 50 formed closer to the winding center than the positive electrode start end 11a. The folded-back portion 50 is formed in a substantially Z-shape in plan view, for example, and reverses the direction of a start end 13a of the separator 13. The start end 13a means a winding start-side end of the separator 13, which is one end of the separator 13 in the longitudinal direction located at the winding center side of the electrode assembly 14. The two separators 13 are provided so as to overlap from a position corresponding to the negative electrode start end 12a to the vicinity of the start end 13a. The folded-back portion 50 is formed by folding the two separators 13 at the same position.

As illustrated in FIGS. 2 and 3, the separator 13 has an extension portion 51 extending from the folded-back portion 50 toward the winding end side of the electrode assembly 14 to cover the winding start-side end portion of the positive electrode 11 including the positive electrode start end 11a from both sides. The extension portion 51 is formed in the two separators 13. Therefore, the winding start-side end portion of the positive electrode 11 may be covered from both sides of the positive electrode 11 in the thickness direction. The two separators 13 are folded back at the folded-back portion 50 so that the start end 13a is directed toward the winding end side, and are divided into an inner peripheral side and an outer peripheral side of the positive electrode 11 in the vicinity of the positive electrode start end 11a to cover both surfaces of the positive electrode 11.

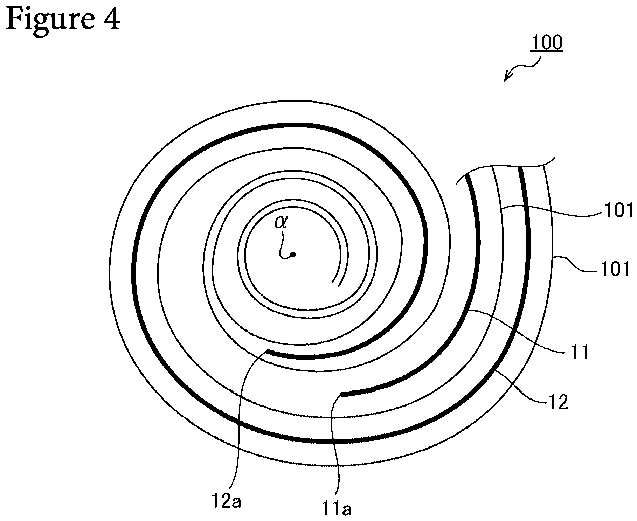

FIG. 4 is a view illustrating an example of a structure of a conventional electrode assembly 100. As illustrated in FIG. 4, in the electrode assembly 100, two separators 101 extend toward the winding center side beyond the negative electrode start end 12a, in common with the separator 13 of the electrode assembly 14. On the other hand, the two separators 101 are different from the separator 13 of the electrode assembly 14 in that the two separators 101 are not folded back, but a start end 101a thereof is directed toward the winding center α. As illustrated in FIGS. 2 and 4, the structure of the electrode assembly 14 in the present embodiment significantly differs from the structure of the conventional electrode assembly 100.

The folded-back portion 50 of the separator 13 may be formed in a winding core portion of the electrode assembly 14. The winding core of the electrode assembly 14 means a portion of the winding core 60 when the winding core 60 remains, or a cavity extending in an axial direction formed in a trace of the winding core 60 when the winding core 60 is removed. The winding core of the electrode assembly 14 functions, for example, as a gas discharge path in the event of an abnormality of the battery. The two separators 13 are bent in a Z-shape in plan view at the folded-back portion 50, traverse the winding core of the electrode assembly 14, and are folded back to the winding end side of the electrode assembly 14.

The extension portion 51 of the separator 13 extends from the folded-back portion 50 to the start end 13a, and a part thereof overlaps a portion of the separator 13 toward the folded-back portion 50. The extension portion 51 extends beyond the position of the negative electrode start end 12a and further to a position beyond the positive electrode start end 11a. The extension portion 51 is composed of two separators 13 overlapping each other from the folded-back portion 50 to the vicinity of the positive electrode start end 11a, and as described above, the two separators 13 are spaced apart from each other in the vicinity of the positive electrode start end 11a and are disposed one by one on both sides of the positive electrode 11.

The extension portion 51 covers a first surface of the positive electrode 11 facing the inner peripheral side of the electrode assembly 14 and a second surface of the positive electrode 11 facing the outer peripheral side at the winding start-side end portion of the positive electrode 11. Since the first and second surfaces of the winding start-side end portion of the positive electrode 11 are also covered with a portion of the separator 13 toward the folded-back portion 50, two separators 13 are interposed between the first and second surfaces of the winding start-side end portion and the negative electrode 12. Thus, the winding start-side end portion of the positive electrode 11 is protected by the separator 13 having a thickness twice as large as that of the other portions.

The length of the extension portion 51 covering the winding start-side end portion of the positive electrode 11 is preferably greater than or equal to 3 mm and less than or equal to 15 mm in the longitudinal direction of the positive electrode 11, and more preferably greater than or equal to 5 mm and less than or equal to 10 mm. That is, the positive electrode 11 is protected by the extension portion 51 in a range of greater than or equal to 3 mm and less than or equal to 10 mm in the longitudinal direction from the positive electrode start end 11a. In this case, the risk of a short circuit that may occur in the vicinity of the winding center α of the electrode assembly 14 may be sufficiently reduced without substantially impairing smooth ion movement between the positive and negative electrodes. The positive electrode 11 changes in volume due to the charge and discharge of the battery, but with the extension portion 51 overlapping by greater than or equal to 3 mm, the detachment of the extension portion 51 from the positive electrode 11 may be sufficiently suppressed.

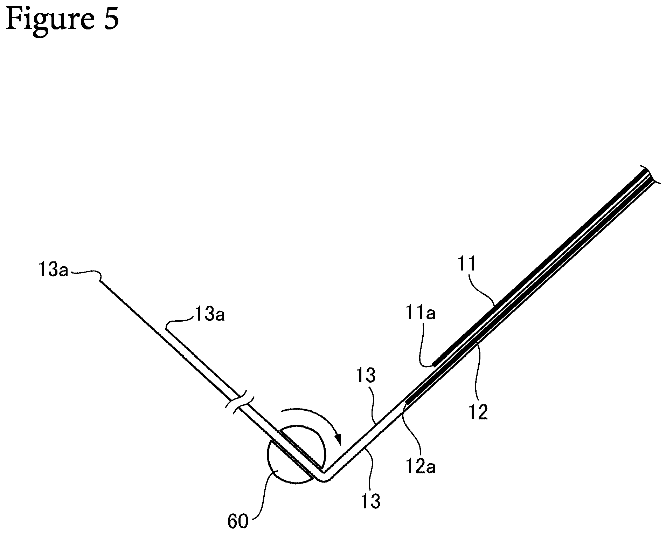

FIG. 5 is a diagram illustrating a method for producing the electrode assembly 14 comprising the above configuration. As illustrated in FIG. 5, the electrode assembly 14 may be produced by spirally winding the positive electrode 11, the negative electrode 12, and the separator 13 using the winding core 60. First, the negative electrode 12 is disposed between two separators 13, and the positive electrode 11 is overlapped so as to face the negative electrode 12 through a separator 13 (hereinafter referred to as an "inner separator 13") serving as a winding inner side of the two separators 13. At this time, the negative electrode 12 extends beyond the position corresponding to the positive electrode start end 11a, and the separator 13 is disposed to extend beyond the position corresponding to the negative electrode start end 12a.

Next, the winding core 60 is attached between the start ends 13a of the two separators 13 and the negative electrode start end 12a so as to sandwich the two separators 13 therebetween. The two separators 13 are in a state in which a portion on the side of the start end 13a largely extends from the winding core 60 so that an extension portion 51 having a sufficient length is formed. At this time, a separator 13 (hereinafter referred to as the "outer separator 13") serving as a winding outer side of the two separators 13 is preferably extended longer than the inner separator 13. In this case, both surfaces of the winding start-side end portion of the positive electrode 11 are easily covered with the inner separator 13 and the outer separator 13 completely.

The winding core 60 is rotated in the direction of the arrow in the state illustrated in FIG. 5 to form a folded-back portion 50 in the portion of the separator 13 sandwiched by the winding core 60, and the portion extending from the winding core 60 to the start end 13a is folded back to the winding end side to form an extension portion 51 extending toward the positive electrode start end 11a. When the positive electrode start end 11a is inserted between the two separators 13 while rotating the winding core 60, the first surface of the winding start-side end portion of the positive electrode 11 is covered with the inner separator 13, and the second surface is covered with the outer separator 13. Thereafter, the winding core 60 is continuously rotated to obtain a wound electrode assembly 14.

As described above, the cylindrical battery 10 comprising the electrode assembly 14 can sufficiently reduce the risk of a short circuit that may occur in the vicinity of the winding center α of the electrode assembly 14. The electrode assembly 14 expands and contracts in the radial direction upon charge and discharge, and at this time, stress may be concentrated in the vicinity of the positive electrode start end 11a, causing deformation such that the negative electrode 12 bends in the vicinity of the positive electrode start end 11a. Although such deformation of the negative electrode 12 may occur either on the inner or outer peripheral side of the positive electrode start end 11a, according to the electrode assembly 14, both surfaces of the winding start-side end portion of the positive electrode 11 are covered with the extension portion 51 of the separator 13, and both surfaces are protected by the two separators 13. As a result, the separator 13 is more reliably prevented from rupturing at the bending part of the negative electrode 12 and coming into contact with the positive electrode 11.

The deformation of the negative electrode 12 is likely to occur in conjunction with an increase in the capacity of the cylindrical battery 10 and a reduction in the thickness of the separator 13. It is assumed that the above configuration of the electrode assembly 14 will become more important in the future.

The embodiment may be appropriately changed in design within a range that does not impair the object of the present disclosure. For example, in the example illustrated in FIGS. 2 and 3, each surface of the winding start-side end portion of the positive electrode 11 is covered with the extension portion 51 of the separator 13 by substantially the same length, but the inner separator 13 may cover the positive electrode 11 more widely than the outer separator 13. Alternatively, the outer separator 13 may cover the positive electrode 11 more widely than the inner separator 13.

### REFERENCE SIGNS LIST

10 Cylindrical battery, 11 Positive electrode, 11a Positive electrode start end, 12 Negative electrode, 12a Negative electrode start end, 13 Separator, 13a Start end, 14 Electrode assembly, 16 Outer can, 17 Sealing assembly, 18 Upper insulating plate, 19 Lower insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 50 Folded-back portion, 51 Extension portion, 60 Winding core, 100 Electrode assembly, 101 Separator, α Winding center

## Claims

1. A secondary battery, comprising:
an electrode assembly including a positive electrode, a negative electrode, and a separator, wherein the positive electrode and the negative electrode are wound with the separator interposed between the positive electrode and the negative electrode, wherein
the separator has a folded-back portion formed closer to a winding center than a winding start-side end portion of the positive electrode, and an extension portion extending from the folded-back portion toward a winding end side of the electrode assembly to cover the winding start-side end portion of the positive electrode from both sides.

2. The secondary battery according to claim 1, wherein a length of the extension portion of the separator covering the winding start-side end portion of the positive electrode is greater than or equal to 3 mm and less than or equal to 10 mm in a longitudinal direction of the positive electrode.
